# EUROPÄISCHE PATENTSCHRIFT

(11) **EP 3 271 217 B1**
(45) Veröffentlichungstag und Bekanntmachung des Hinweises auf die Patenterteilung: **18.05.2022**
(21) Anmeldenummer: 16705897.3
(22) Anmeldetag: 23.02.2016
(51) Int. Cl.: B60R 19/18, B60R 19/34

(54) **PERSONENKRAFTWAGEN MIT EINEM FRONTENDTRÄGER**
MOTOR VEHICLE WITH FRONTENDCARRIER
VEHICULE AUTOMOBILE AVEC FACADE AVANT PORTANTE

(30) Priorität: 07.05.2015 DE 102015005925
(43) Veröffentlichungstag der Anmeldung: 24.01.2018
(73) Patentinhaber: Mercedes-Benz Group AG, 70372 Stuttgart (DE)
(72) Erfinder: HUMPENOEDER, Jens, 89077 Ulm (DE); KAISER, Robin, 72160 Horb am Neckar (DE); METZNER, Thomas, 75365 Calw Altburg (DE); RUSS, Jörg, 90518 Altdorf (DE)
(74) Vertreter: Moore, David Simon
(86) Internationale Anmeldenummer: PCT/EP2016/000309
(87) Internationale Veröffentlichungsnummer: WO 2016/177440

(56) Entgegenhaltungen:
- EP-A1- 1 293 389
- EP-A1- 1 942 033
- DE-A1-102005 025 353
- FR-A1- 2 895 341
- FR-A1- 2 896 222

## Beschreibung

Die Erfindung betrifft einen Personenkraftwagen.

Aus der DE 10 2010 054 917 A1 geht ein Frontendträger hervor, der ein Querträgerelement und wenigstens zwei seitliche Strebenelemente aufweist, welche über das Querträgerelement miteinander verbunden sind und sich in Fahrzeughochrichtung nach unten von dem Querträgerelement weg erstrecken und über einen weiteres Querträgerelement miteinander verbunden sind. Zwischen den Strebenelementen ist ein Kühlmodul aufgenommen.

Aus der WO 2011/058152 A1 geht ein Fahrzeug hervor, in dessen Frontbereich ein Biegequerträger eines Stoßfängers über auch als Crashabsorber oder Crashboxen bezeichnete Energieabsorptionselemente mit dahinter angeordneten Längsträgern einer Hauptlängsträgerebene verbunden ist. Vom Stoßfänger-Biegequerträger stehen nach unten weg seitliche Strebenelemente ab, welche an ihrem unteren Ende mit einem unteren Querträger verbunden sind.

Aus der FR 2 895 341 A1 geht ein Kraftwagen mit seitlichen Längsträgern hervor, an denen stirnseitig ein Biegequerträger einer Stoßfängeranordnung befestigt ist. Des Weiteren ist ein mit Rippen versehenes, als Ganzes vor dem Stoßfängerbiegequerträger angeordnetes Energieabsorptionsmodul vorgesehen, welches einen oberen Querträger und einen unteren Querträger aufweist, welche über seitliche Strebenelemente miteinander verbunden sind. Der obere Querträger ist auf Höhe des Stoßfängerbiegequerträgers angeordnet und kann sich rückwärtig an diesem abstützen. Der untere Querträger ist auf Höhe von Längsträgerelementen eines Vorderachsträgers angeordnet, an denen in Verlängerung auch als Crashboxen bezeichnete Energieabsorptionselemente angeordnet sind, an denen sich der untere Querträger nach hinten hin abstützen kann.

Aus der US 7 681 700 B2 geht ein Kraftfahrzeug mit einer Stoßfängeranordnung hervor, die einen Biegequerträger umfasst, dem ein bei einem Anprall an die Fahrzeugfront sich energieabsorbierend verformbares Absorberelement vorgeordnet ist. Dieses erstreckt sich vom Stoßfänger-Biegequerträger nach unten weg bis auf Höhe eines Motorträgers und über eine maßgebliche Breite der Fahrzeugfront. Aus der DE102004063741 A1 geht ein Vorderwagen mit Crashwänden hervor. Dabei sind die Tragstrukturelemente im wesentlichen kastenförmig energieabsorbierend ausgebildet.

Moderne Fahrzeuge werden im Frontbereich häufig relativ flach gestaltet, was den Fahrzeugen ein sportliches Aussehen verleiht. Dabei ist deren den Stoßfänger-Biegequerträger aufweisende Hauptlängsträgerebene, ebenso wie häufig auch bei kleineren Kraftfahrzeugen, in einer geringeren Höhe über der Fahrbahn angeordnet, als beispielsweise bei Kraftfahrzeugen mit großer Bodenfreiheit und einem hohen Böschungswinkel, zum Beispiel Geländewagen oder Pickups. Daher besteht bei einer derartig niedrigen Frontstruktur die Gefahr, dass bei einem Zusammenstoß mit einem großen/hohen Kraftfahrzeug die Crashstruktur der Hauptlängsträgerebene, in welcher sich auch der Stoßfänger-Biegequerträger befindet, des Kraftfahrzeugs mit der relativ niedrigen Frontstruktur nicht aktiviert wird und es zum sogenannten Unterfahren kommt, was die Gefahr für Verletzungen der Insassen oder zumindest die auf sie wirkenden Belastungen erhöht.

Aufgabe der vorliegenden Erfindung ist es, einen Personenkraftwagen zu schaffen, mittels welchem sich ein besonders vorteilhaftes Unfallverhalten des Personenkraftwagens auch dann realisieren lässt, wenn dieser im Frontbereich relativ flach gestaltet ist.

Diese Aufgabe wird erfindungsgemäß durch einen Personenkraftwagen mit den Merkmalen des Anspruchs 1 gelöst. Vorteilhafte Ausgestaltungen mit zweckmäßigen Weiterbildungen der Erfindung sind in den übrigen Ansprüchen angegeben.

Der Personenkraftwagen weist einen Frontendträger mit wenigstens einem Querträgerelement und wenigstens zwei seitlichen, über das Querträgerelement miteinander verbundenen und sich in Fahrzeughochrichtung nach unten vom Querträgerelement weg erstreckenden, vorderen Strebenelementen auf. Weiterhin ist eine erste Längsträgerebene vorgesehen, in welcher seitliche Längsträger sowie zugehörige, zumindest mittelbar mit einem sich zumindest im Wesentlichen in Fahrzeugquerrichtung erstreckenden Biegequerträger eines Stoßfängers verbundene Energieabsorptionselemente angeordnet sind. Diese erste Längsträgerebene ist in Fahrzeughochrichtung gesehen unterhalb des Frontendträgers angeordnet. An dieser auch als Hauptlängsträgerebene bezeichneten ersten Längsträgerebene ist der Frontendträger über die vorderen Strebenelemente abgestützt. Des Weiteren sind zur Ausbildung einer weiteren Lastebene dienende, oberhalb der ersten Längsträgerebene und unterhalb des oberen Querträgerelements angeordnete, seitliche Energieabsorptionselemente vorgesehen, die mit dem jeweiligen vorderen Strebenelement verbunden oder in das jeweilige vordere Strebenelement integriert sind und welche jeweils einen, das jeweilige vordere Strebenelement in Fahrzeuglängsrichtung nach hinten überragenden Abstützbereich aufweisen. Weiterhin ist wenigstens ein hinter dem jeweiligen Energieabsorptionselement anordenbares beziehungsweise angeordnetes Strukturbauteil, beispielsweise ein hinteres Strebenelement, vorgesehen, an welchem das Energieabsorptionselement mit seinem Abstützbereich abstützbar oder abgestützt ist.

Der erfindungsgemäße Personenkraftwagen zeichnet sich also dadurch aus, im Bereich zwischen der den Stoßfänger-Biegequerträger aufweisenden ersten Längsträgerebene und dem oberen Querträgerelement des Frontendträgers eine weitere Lastebene beziehungsweise ein zusätzlicher Lastpfad vorgesehen ist, in welcher mittels entsprechender Energieabsorptionselemente, die auch als Crashabsorber, Crashenergieabsorber oder Crashboxen bezeichnet werden, kollisionsbedingte Kräfte in die Karosseriestruktur des Personenkraftwagen ein- beziehungsweise weitergeleitet und auch durch Verformung der Energieabsorptionselemente der zusätzlichen Lastebene reduziert werden. Die Anordnung des zusätzlichen Lastpfads verhindert ein Unterfahren eines höheren Kollisionspartners, das heißt beispielsweise eines Geländewagens, dessen Stoßfänger-Biegequerträger nicht getroffen und somit auch nicht die Hauptlängsträgerebene des erfindungsgemäßen Personenkraftwagens aktiviert wird. Die zusätzliche Crashstruktur oberhalb der Hauptlängsträgerebene, welche mittels vorderer Strebenelemente an dieser unterhalb angeordneten Längsträgerebene abgestützt sind, wird aber aktiviert und absorbiert die vom Kollisionspartner eingeleiteten Kräfte zumindest teilweise und stellt vorzugsweise auch eine Weiterleitung derselben über die vorderen Strebenelemente an die darunter angeordnete Hauptlängsträger sicher.

Grundsätzlich ist es möglich, dass in wenigstens eines der vorderen Strebenelemente ein Energieabsorptionselement integriert ist, welches aus wenigstens einem Organoblech gebildet sein kann. Mit anderen Worten weist das Energieabsorptionselement wenigstens ein Organoblech auf beziehungsweise ist unter Verwendung wenigstens eines Organoblechs hergestellt.

Aufgrund der im zusätzlichen Lastpfad vorgesehenen Energieabsorptionselemente ist eine zumindest im Wesentlichen rechteckigen Kraft-Weg-Kennung realisierbar, so dass Unfallenergie besonders vorteilhaft aufgenommen und insbesondere geführt werden kann. Darüber hinaus können das Energieabsorptionselement und somit der Frontendträger insgesamt in Leichtbauweise ausgestaltet werden, da das Gewicht des Energieabsorptionselements und somit des Frontendträgers insgesamt gering gehalten werden kann.

Unter einem Organoblech ist im Allgemeinen ein Faserverbundwerkstoff zu verstehen, welcher wenigstens einen Kunststoff als Matrix beziehungsweise Kunststoffmatrix und Verstärkungsfasern umfasst, die in die Kunststoffmatrix eingebettet sind. Vorzugsweise handelt es sich bei dem Kunststoff beziehungsweise der Kunststoffmatrix um einen Thermoplasten, so dass eine besonders hohe Umformfähigkeit, insbesondere Warmumformfähigkeit, des Organoblechs realisierbar ist. Das Organoblech ist insbesondere ein Faser-Matrix-Halbzeug, welches ähnlich wie Blechhalbzeuge, insbesondere Blechplatinen, umgeformt werden kann. Hierdurch ist es möglich, das Organoblech zum Herstellen des Energieabsorptionselements bedarfsgerecht und kostengünstig umzuformen. Bei den Verstärkungsfasern handelt es sich vorzugsweise um Glasfasern, Aramidfasern, Naturfassen und/oder Kohlenstofffasern beziehungsweise Carbonfasern.

In vorteilhafter Ausgestaltung der Erfindung weist das Organoblech eine gefaltete Struktur auf. Durch eine solche gefaltete Organoblech-Struktur kann beispielsweise eine hinreichende Steifigkeit des Energieabsorptionselements realisiert werden, so dass ein unerwünschtes und beispielsweise frühes Abknicken verhindert werden kann.

Gleichzeitig kann ein besonders hohes Energieaufnahmevermögen des Energieabsorptionselements dargestellt werden, so dass mittels des Energieabsorptionselements ein besonders hoher Betrag an Unfallenergie unter Verformen des Energieabsorptionselements aufgenommen beziehungsweise absorbiert werden kann.

Als besonders vorteilhaft hat es sich gezeigt, wenn das Organoblech zumindest in einem Teilbereich einen Hohlquerschnitt aufweist. Bei dem Hohlquerschnitt kann es sich um einen offenen oder aber geschlossenen Hohlquerschnitt handeln. Hierdurch kann das Gewicht des Energieabsorptionselements und somit des Frontendträgers gering gehalten werden bei gleichzeitiger Realisierung des besonders vorteilhaften Unfallverhaltens.

Eine weitere Ausführungsform zeichnet sich dadurch aus, dass das Organoblech mit einem Kunststoff zum Aussteifen des Organoblechs versehen ist. Durch dieses Versehen des Organoblechs mit einem Kunststoff kann das Organoblech gezielt und bedarfsgerecht ausgesteift werden, so dass beispielsweise beim Deformationsvorgang ein unerwünschtes Ausbeulen und Knicken des Energieabsorptionselements vermieden werden können. Insbesondere ist es möglich, das Organoblech lokal und somit gezielt mit dem Kunststoff zu versehen und somit lokal auszusteifen, so dass ein geringes Gewicht realisiert und dass Unfallverhalten des Energieabsorptionselements gezielt eingestellt werden kann. Durch den Einsatz des Kunststoffs ist es insbesondere möglich, ein Abknicken des als Crash-Absorber fungierenden Energieabsorptionselements beim Aufprallen auf eine geneigte Barriere, welche beispielsweise um zumindest im Wesentlichen zehn Grad geneigt ist, zu vermeiden. Auch ein Ausbeulen des Energieabsorptionselements lässt sich vermeiden.

Um das Organoblech beziehungsweise das Energieabsorptionselement besonders effektiv und bauraumgünstig auszusteifen, ist es bei einer weiteren Ausführungsform der Erfindung vorgesehen, dass der Kunststoff zumindest teilweise in dem Hohlquerschnitt aufgenommen ist.

Als besonders vorteilhaft hat es sich gezeigt, wenn durch den Kunststoff Versteifungsrippen gebildet sind. Hierdurch lässt sich eine Versteifungsstruktur bilden, mittels welcher das Organoblech besonders gewichtsgünstig und effektiv versteift ist.

Um ein unerwünschtes Abknicken und Ausbeulen des Energieabsorptionselements bei einem Unfall auf besonders sichere Weise zu vermeiden, erstreckt sich beispielsweise wenigstens eine der Versteifungsrippen von einer den Hohlquerschnitt zumindest teilweise begrenzenden ersten Wandung durchgängig bis zu einer gegenüberliegenden, den Hohlquerschnitt zumindest teilweise begrenzenden zweiten Wandung des Organoblechs, wobei die wenigstens eine Versteifungsrippe an diesen Wandungen abgestützt beziehungsweise mit den Wandungen verbunden ist. Hierdurch kann beispielsweise ein unerwünschtes Kollabieren des Hohlquerschnitts sicher vermieden werden.

Um das Organoblech besonders effektiv auszusteifen, ist es bei einer weiteren Ausführungsform der Erfindung vorgesehen, dass wenigstens zwei der Versteifungsrippen diagonal zueinander, insbesondere über Kreuz, verlaufen.

Eine weitere Ausführungsform zeichnet sich dadurch aus, dass der Kunststoff an das Organoblech angespritzt ist. Mit anderen Worten ist das Organoblech mittels eines Spritzgießverfahrens mit dem Kunststoff versehen. Hierdurch kann das Energieabsorptionselement und somit der Frontendträger besonders kostengünstig hergestellt werden bei gleichzeitiger Realisierung eines besonders vorteilhaften Unfallverhaltens.

Schließlich hat es sich als besonders vorteilhaft gezeigt, wenn das wenigstens eine Strebenelement, in welches das Energieabsorptionselement integriert ist, aus einem Kunststoff gebildet ist. Dabei hat es sich als besonders vorteilhaft gezeigt, wenn das Strebenelement an das Organoblech angespritzt ist. Mit anderen Worten ist es denkbar, das wenigstens eine Strebenelement mittels eines Spritzgießverfahrens herzustellen und dabei das wenigstens eine Organoblech mit einem Kunststoff, aus welchem das Strebenelement hergestellt wird, anzuspritzen beziehungsweise zu umspritzen. Hierdurch kann das Energieabsorptionselement besonders einfach und kostengünstig in das wenigstens eine Strebenelement integriert werden.

Weitere Vorteile, Merkmale und Einzelheiten der Erfindung ergeben sich aus der nachfolgenden Beschreibung bevorzugter Ausführungsbeispiele sowie anhand der Zeichnung. Dabei zeigen:
- Fig. 1: eine schematische Seitenansicht eines ersten Ausführungsbeispiels eines Frontendträgers für einen Personenkraftwagen mit wenigstens einem Querträgerelement und mit wenigstens zwei seitlichen, über das Querträgerelement miteinander verbundenen und sich in Fahrzeughochrichtung nach unten von dem Querträgerelement wegerstreckenden Strebenelementen, über welche der Frontendträger an einer ersten Längsträgerebene des Personenkraftwagens abstützbar ist,
- Fig. 2: eine weitere schematische Seitenansicht auf den Frontendträger gemäß Fig. 1 mit einem separat von den Strebenelementen ausgebildeten Energieabsorptionselement,
- Fig. 3: eine schematische Seitenansicht auf eine weitere Ausführungsform eines der Strebenelements, in welches ein Energieabsorptionselement integriert ist,
- Fig. 4: eine perspektivische Darstellung eines zweiten Ausführungsbeispiels des erfindungsgemäßen Frontendträgers,
- Fig. 5: eine perspektivische Darstellung eines dritten Ausführungsbeispiels des erfindungsgemäßen Frontendträgers und
- Fig. 6: einen vergrößerten Ausschnitt des Frontendträgers gemäß Figur 5.

In den Figuren wurden gleiche Teile und funktionsgleiche Elemente mit den gleichen Bezugszeichen versehen, so dass insofern auf die jeweils vorangegangene Beschreibung verwiesen wird. Bei gleichen Teilen oder funktionsgleichen Elementen, welche sich sowohl auf der linken als auch der rechten Fahrzeugseite befinden, wurde das jeweils auf der rechten Fahrzeugseite vorgesehene Teil/Element mit dem gleichen Bezugszeichen aber zusätzlich mit dem Index -'- versehen.

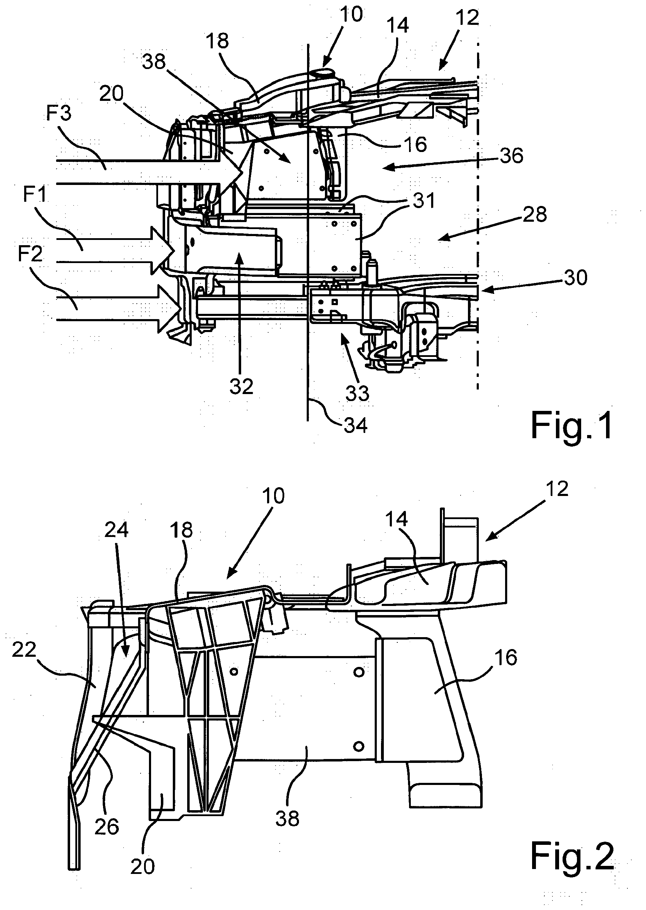

Fig. 1 zeigt in einer schematischen Seitenansicht einen Frontendträger 10 für einen Personenkraftwagen, der in Fahrzeuglängsrichtung vor einer Vorbaustruktur 12 des Personenkraftwagens angeordnet ist. Die Vorbaustruktur 12 umfasst ein Querträgerelement 14 sowie seitliche, hintere Strebenelemente, von denen in Fig. 2 ein hinteres Strebenelement 16 erkennbar ist. Die folgenden Ausführungen zum hinteren Strebenelement 16 sind ohne weiteres auf das in Fig. 2 nicht erkennbare, rechte hintere Strebenelement übertragbar. Das hintere Strebenelement 16 erstreckt sich in Fahrzeughochrichtung (z-Richtung) nach unten von dem Querträgerelement 14 weg und wird auch als hintere Z-Strebe bezeichnet, die unter anderem rohbaufest montiert sein kann.

Der separat von der Vorbaustruktur 12 ausgebildete und an der Vorbaustruktur 12 befestigbare beziehungsweise befestigte Frontendträger 10 umfasst ein Querträgerelement 18, welches beispielsweise als Kühlerbrücke ausgebildet ist. Dies bedeutet, dass im fertig hergestellten Zustand des Personenkraftwagens ein Kühlmodul am Querträgerelement 18 befestigt ist.

Ferner umfasst der Frontendträger 10 zwei seitliche, vordere Strebenelemente, von denen in Fig. 1 ein linkes vorderes Strebenelement 20 erkennbar ist. Die folgenden Ausführungen zum linken vorderen Strebenelement 20 sind ohne weiteres auch auf das rechte vordere Strebenelement des Frontendträgers 10 übertragbar. Dabei sind die vorderen Strebenelemente des Frontendträgers 10 über das Querträgerelement 18 miteinander verbunden und erstrecken sich in Fahrzeughochrichtung (z-Richtung) nach unten von dem Querträgerelement 18 weg, so dass die vorderen Strebenelemente 20 des Frontendträgers 10 auch als vordere Z-Streben bezeichnet werden.

In Fig. 2 ist auch ein Mittelbereich 22 des Frontendträgers 10 erkennbar, über den beispielsweise ein Fanghaken für eine Fronthaube des Personenkraftwagens befestigt ist. Ferner dient der Mittelbereich 22 zum Halten wenigstens eines Sensors, beispielsweise eines Abstandssensors, des Personenkraftwagens.

Schließlich umfasst der Frontendträger 10 eine Strebenanordnung 24 mit in diesem hier dargestellten Ausführungsbeispiel zumindest im Wesentlichen V-förmig zueinander verlaufenden Streben, von denen eine linke Strebe 26 in Fig. 2 erkennbar ist. Die jeweiligen Streben der Strebenanordnung 24 erstrecken sich dabei von dem jeweiligen Bereich der vorderen Z-Streben in Richtung des Mittelbereichs 22 und dienen zur Realisierung einer hohen Steifigkeit des Frontendträgers 10, so dass dieser ein besonders vorteilhaftes Geräuschverhalten aufweist, was auch als NVH-Verhalten bezeichnet wird (NVH - Noise Vibration Harshness).

In Fig. 1 ist erkennbar, dass in Fahrzeughochrichtung (z-Richtung) unterhalb des Frontendträgers 10 eine erste Längsträgerebene 28 angeordnet ist, in welcher zwei in Fig. 1 nicht dargestellte, seitliche Längsträger sowie zugehörige, an diesen Längsträgern befestigbare Energieabsorptionselemente 31 angeordnet sind, welche auch als Crashboxen bezeichnet werden. Die Längsträgerebene 28 wird auch als Hauptlängsträgerebene bezeichnet.

Die Crashboxen (Energieabsorptionselemente 31) der ersten Längsträgerebene 28 sind zumindest mittelbar mit einem sich zumindest im Wesentlichen in Fahrzeugquerrichtung erstreckenden Biegequerträger 32 eines Stoßfängers des Personenkraftwagens verbunden. Dadurch kann sich beispielsweise bei einer Frontalkollision des Personenkraftwagens ein erster Lastpfad ausbilden, welcher in Fig. 1 durch einen Kraftpfeil F1 veranschaulicht ist. Über diesen ersten Lastpfad F1 können unfallbedingte Lasten, das heißt Unfallenergie aufgenommen und absorbiert sowie in nachfolgende Karosserietragstrukturteile, beispielsweise in die Längsträger der ersten Längsträgerebene 28 und in weitere Rohbauabschnitte der Karosserie weitergeleitet werden.

In Fig. 1 ist erkennbar, dass der Frontendträger 10 über die vorderen Z-Streben an der ersten Längsträgerebene 28 abgestützt ist. Unterhalb der Längsträgerebene 28, welche eine erste Lastebene darstellt, ist eine weitere Längsträgerebene 30 und somit eine weitere Lastebene angeordnet, über welche sich ein zweiter Lastpfad ausbilden kann. Dieser zweite Lastpfad ist in Fig. 1 durch einen Kraftpfeil F2 veranschaulicht. In diesem Lastpfad F2 befindet sich auch ein als Fahrschemel oder Hilfsrahmen bezeichneter, in Figur 1 teilweise dargestellter Integralträger 33, an dem üblicherweise aufbauseitige Anlenkpunkte von Radaufhängungen, ein Antriebsaggregat, insbesondere Motor, ein Getriebe und/oder dergleichen befestigt sind. Der Integralträger 33 ist seinerseits starr oder über Elastomerlager mit der Fahrzeugkarosserie, insbesondere auch den Längsträgern der darüber angeordneten ersten Längsträgerebene 28 verbunden beziehungsweise daran befestigt.

Auch über die untere Längsträgerebene 30 können unfallbedingte Lasten aufgenommen und abgestützt werden. Zu solchen unfallbedingten Lasten kommt es beispielsweise bei einer Frontalkollision mit einer geringen Geschwindigkeit, das heißt einem sogenannten Reparaturcrash. Die sogenannte Repa-Crashebene ist in Fig. 1 mit dem Bezugszeichen 34 bezeichnet und markiert in Fahrzeuglängsrichtung (x-Richtung) eine gedachte Deformationsgrenze, hinter der -gemäß der Darstellung der Figur 1 rechts davon- keine Beschädigungen der Rohbaustruktur der Fahrzeugkarosserie bei einem Reparaturcrash auftreten sollen. In beziehungsweise auf Höhe der untersten Längsträgerebene 30 befindet sich auch der sogenannte "Lower Stiffener", also der Anschlagbereich eines Fußgängers im Kollisionsfall mit dem Personenkraftwagen, der im Unterschenkelbereich, üblicherweise oberhalb des Fußknöchels desselben und unterhalb dessen sich auf Höhe der Hauptlängsträgerebene 28 abstützenden Knies so durch den "Lower Stiffener" abgestützt wird, dass ein großer Kniebeugewinkel und ein Überrollen des Fußgängers vom Fahrzeug vermieden werden kann.

Zur Realisierung einer dritten Lastebene 36 kommen am Frontendträger 10 gemäß Fig. 1 und Fig. 2 seitliche Energieabsorptionselemente zum Einsatz, von denen in Fig. 1 und Fig. 2 ein mit 38 bezeichnetes, linkes Energieabsorptionselement erkennbar ist. Die folgenden Ausführungen zum linken Energieabsorptionselement 38 können auch auf das in Fig. 1 und Fig. 2 nicht erkennbare, rechte Energieabsorptionselement übertragen werden. Über die dritte Lastebene 36 kann sich bei einer Frontalkollision ein dritter Lastpfad ausbilden, welcher durch einen Kraftpfeil F3 veranschaulicht ist. Diese dritte Lastebene 36 befindet sich also oberhalb der Hauptlängsträgerebene 28 und unterhalb des oberen Querträgerelements 18, insbesondere der Kühlerbrücke, des Frontendträgers 10 und dient insbesondere dazu, dass bei einer Frontalkollision des erfindungsgemäßen Personenkraftwagens mit einem eine große Bodenfreiheit und/oder einen hohen Böschungswinkel aufweisenden Kraftfahrzeug, beispielsweise einem sogenannten Geländewagen, Pick-up oder sonstigem SUV, dieses nicht unterfährt. Das bedeutet, dass aufgrund der vergleichsweise niedrigen Frontstruktur des erfindungsgemäßen Personenkraftwagens dessen Hauptlängsträgerebene 28 durch die korrespondierenden Tragstrukturen des hohen Geländewagens nicht oder nicht in einem ausreichenden Maße unmittelbar aktiviert wird, was neben dem Unterfahren des Geländewagens auch zu erhöhten Insassenbelastungen führt beziehungsweise führen kann.

Das Energieabsorptionselement 38 wird auch als Deformationselement oder Crashabsorber bezeichnet, der bei einer Frontalkollision mit Unfallenergie beaufschlagt wird und sich unter Energieabsorption verformen kann. Gemäß Fig. 1 und Fig. 2 ist das jeweilige Energieabsorptionselement der dritten Lastebene 36 separat von den vorderen Z-Streben (Strebenelement 20) ausgebildet und mit diesen verbunden. Dabei ist das Energieabsorptionselement 38 beispielsweise aus einem metallischen Werkstoff und vorliegend als Strangpressprofil ausgebildet. Durch diese separate Ausgestaltung des Energieabsorptionselements 38 vom korrespondierenden, vorderen Strebenelement 20 können diese aus unterschiedlichen Materialien hergestellt werden.

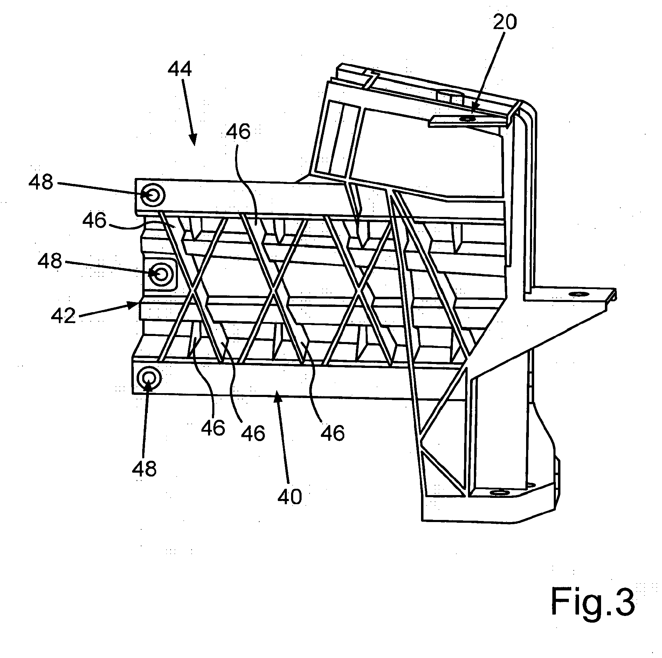

Um nun den Frontendträger 10 derart weiterzuentwickeln, dass sich ein besonders vorteilhaftes Unfallverhalten, insbesondere bei einer Frontalkollision, realisieren lässt, ist -wie anhand von Fig. 3 veranschaulicht ist- in das Strebenelement 20, das heißt in die jeweilige vordere Z-Strebe, ein Energieabsorptionselement 40 integriert, welches vorzugsweise aus Kunststoffmaterial hergestellt ist und gegebenenfalls verstärkende oder versteifenden Einlegern, beispielsweise aus Metall, aufweist. Bei einem vorteilhaften Ausführungsbeispiel ist vorgesehen, dass das jeweilige Energieabsorptionselement 40 aus wenigstens einem Organoblech und somit aus einem faserverstärkten und insbesondere thermoplastischen Kunststoff gebildet, das heißt hergestellt ist. Durch diese Integration des Energieabsorptionselements 40 in das Strebenelement 20 kann eine besonders frühzeitige und großflächige Energieaufnahme bei einer Frontalkollision durch Verformung des Energieabsorptionselements 40 realisiert werden.

Unter der Integration des Energieabsorptionselements 40 in das Strebenelement 20 ist zu verstehen, dass das Strebenelement 20 (vordere Z-Strebe) und das Energieabsorptionselement 40 (Crashenergieabsorber) zu einem gemeinsamen Teil beziehungsweise zu einer gemeinsamen Bauteileinheit verbunden sind. Hierdurch kann zusätzlich zu den Längsträgerebenen 28 und 30 ein zusätzlicher, oberer Lastpfad geschaffen werden, über welchen besonders frühzeitig und großflächig sowie insbesondere zumindest im Wesentlichen homogen Unfallenergie aufgenommen werden kann. Insbesondere ist es möglich, das vordere Strebenelement 20 für eine besonders frühe Aktivierung des Energieabsorptionselements 31 zu nutzen.

In Fig. 3 ist erkennbar, dass das Organoblech beziehungsweise das Energieabsorptionselement 40 eine gefaltete Struktur aufweist, so dass sich eine hinreichende Steifigkeit realisieren lässt. In diesem Zusammenhang wird unter "gefalteter Struktur" verstanden, dass das Organoblech nicht vollflächig eben ausgebildet ist, sondern -im Querschnitt gesehen- einen stufigen, abgewinkelten Verlauf aufweist, wodurch quasi Sicken, Nuten und dergleichen gebildet sind. Ferner weist das Organoblech zumindest in einem Teilbereich einen Hohlquerschnitt 42 auf, welcher vorliegend als offener Hohlquerschnitt ausgebildet ist.

Alternativ ist es denkbar, dass das Energieabsorptionselement 40 in Schalenbauweise ausgebildet ist und dabei wenigstens zwei miteinander verbundene Schalenelemente aufweist, welche unter Ausbildung wenigstens eines geschlossenen Hohlquerschnitts miteinander verbunden sind. Vorliegend ist das Energieabsorptionselement 40 einschalig ausgebildet beziehungsweise durch ein einschaliges Organoblech-Element gebildet.

Das Organoblech ist aus einem faserverstärkten Kunststoff gebildet und umfasst somit einen Kunststoff, durch welchen eine Kunststoffmatrix gebildet ist. Bei diesem Kunststoff handelt es sich vorzugsweise um einen Thermoplasten, insbesondere um Polyamid wie beispielsweise PA6. Ferner umfasst das Organoblech Verstärkungsfasern, welche in die Kunststoffmatrix eingebettet sind. Beispielsweise handelt es sich bei den Verstärkungsfasern um Glasfasern. Alternativ oder zusätzlich ist es denkbar, dass die Verstärkungsfasern als Aramidfasern und/oder Kohlenstofffasern ausgebildet sind.

Bei dem Organoblech handelt es sich beispielsweise um ein aus mindestens einem Fasergewebe oder Fasergelege bestehendes Faser-Matrix-Halbzeug, welches in eigensteifem Zustand in ein Umformwerkzeug eingebracht und mittels des Umformwerkzeugs auf besonders einfache Weise umgeformt werden kann. Dabei ist es möglich, das Organoblech ähnlich eines Blechwerkstoffes beziehungsweise einer Blechplatine umzuformen, so dass das Energieabsorptionselement 40 auf besonders einfache und kostengünstige Weise hergestellt werden kann.

Zur Realisierung eines besonders hohen Energieaufnahmevermögens sowie zur Verhinderung eines unerwünschten Abknickens des Energieabsorptionselements 40 bei einer Frontalkollision ist das Organoblech mit einem Kunststoff zum Aussteifen des Organoblechs versehen. Der Kunststoff ist dabei an das Organoblech angespritzt. Mit anderen Worten wird der Kunststoff beispielsweise mittels eines Spritzgießverfahrens an das Organoblech angespritzt.

Bei einem besonders vorteilhaften und kostengünstigen Herstellungsverfahren des Energieabsorptionselements 40 ist vorgesehen, dass das Organoblech in einem Werkzeug warm umgeformt wird und weiterhin im gleichen Werkzeug gleich anschließend in einem nachfolgenden Prozessschritt die Z-Strebe und die Verrippungen angespritzt werden. Es muss also nicht zwingend zuerst das Organoblech umgeformt und dieses dann in einem zweiten Werkzeug umgespritzt werden.

In Fig. 3 ist erkennbar, dass durch den Kunststoff, welcher als Spritzmasse an das Organoblech angespritzt wird, das Strebenelement 20 gebildet ist. Vorzugsweise ist der Kunststoff als faserverstärkter Kunststoff ausgebildet, wobei der Kunststoff ebenfalls eine Kunststoffmatrix, insbesondere einen Thermoplasten, und Verstärkungsfasern umfasst. Vorzugsweise handelt es sich bei der Kunststoffmatrix um einen Thermoplasten, beispielsweise Polyamid (PA). Vorzugsweise ist der Kunststoff PA6 GF30. Dies bedeutet, dass Verstärkungsfasern in Form von Glasfasern in den Kunststoff eingebettet sind. Alternativ oder zusätzlich ist es denkbar, dass weitere beziehungsweise andere Verstärkungsfasern wie beispielsweise Carbonfasern und/oder Aramidfasern in den Kunststoff eingebettet sind.

Das Energieabsorptionselement 40 weist einen das vordere Strebenelement 20 in Fahrzeuglängsrichtung nach hinten überragenden Abstützbereich 44 auf, mit welchem sich das Energieabsorptionselement 40 an einem dahinter angeordneten Strukturbauteil, insbesondere an dem Querträgerelement 14 abstützbar ist.

Darüber hinaus ist der Kunststoff zumindest teilweise in dem Hohlquerschnitt 42 aufgenommen, wodurch das Energieabsorptionselement 40 beziehungsweise das Organoblech im Bereich des Hohlquerschnitts 42 ausgesteift ist. Durch das lokale Versehen des Organoblechs mit dem Kunststoff kann das Organoblech gezielt und bedarfsgerecht ausgesteift werden, so dass ein unerwünschtes Ausbeulen und Abknicken des Energieabsorptionselements 40 vermieden werden können.

In Fig. 3 ist ferner erkennbar, dass durch den Kunststoff in dem Hohlquerschnitt 42 Versteifungsrippen 46 gebildet sind, wobei die Versteifungsrippen 46 jeweils von einer ersten Wandung des Organobleches zu einer gegenüberliegenden, zweiten Wandung durchgängig verlaufen und dabei an den jeweiligen Wandungen abgestützt sind. Ferner bilden jeweils zwei der Versteifungsrippen 46 ein Versteifungsrippenpaar, wobei die Versteifungsrippen 46 eines solchen Versteifungsrippenpaares diagonal zueinander und vorliegend überkreuz verlaufen. Dadurch ist das Organoblech auf besonders gewichtsgünstige Weise ausgesteift. Mit anderen Worten ist durch die Versteifungsrippen 46 eine Spritzguß-Verrippung geschaffen, durch welche auf kostengünstige Art und Weise ein unerwünschtes Ausbeulen beziehungsweise Verformen des Energieabsorptionselements 40 verhindert wird.

Der Kunststoff ist beispielsweise formschlüssig mit dem Organoblech verbunden. Alternativ oder zusätzlich ist es denkbar, dass der Kunststoff stoffschlüssig mit dem Organoblech verbunden ist. Dabei ist beispielsweise der Kunststoff stoffschlüssig mit der Kunststoffmatrix des Organobleches verbunden, indem -beispielsweise beim Spritzgießen- die Kunststoffmatrix des Organoblechs leicht aufgeschmolzen beziehungsweise angeschmolzen wird, so dass sich die aufgeschmolzene Kunststoffmatrix des Organoblechs stoffschlüssig mit der zunächst noch flüssigen Spritzmasse verbinden kann. Hierdurch kann ein besonders fester Verbund zwischen dem Kunststoff und dem Organoblech realisiert werden.

Ferner weist das Energieabsorptionselement 40 Begrenzungselemente 48 auf, welche auch als "Compression Limiter" bezeichnet werden. Bei einer Frontalkollision wird das Energieabsorptionselement 40 unter Energieverzehrung verformt, insbesondere gestaucht beziehungsweise zusammengedrückt. Die Begrenzungselemente 48 dienen dabei dazu, dieses Stauchen beziehungsweise Zusammendrücken des Energieabsorptionselements zu begrenzen.

Insgesamt ist erkennbar, dass das Energieabsorptionselement 40, welches in das Strebenelement 20 integriert ist, aus einer gefalteten Organoblech-Struktur mit Spritzguß-Verrippung ausgebildet ist, wodurch auf gewichtsgünstige Weise ein besonders vorteilhaftes Unfallverhalten realisiert werden kann.

Festzuhalten bleibt, dass das Energieabsorptionselement 40 und das vordere Strebenelement 20 grundsätzlich aus verschiedenen Materialien bestehen und zu einem Bauteil miteinander verbunden werden können. Diese Verbindung zwischen diesen Teilen kann grundsätzlich kraft-, form- und/oder stoffschlüssig erfolgen. Denkbar sind grundsätzlich auch Materialkombinationen in der Form, dass das vordere Strebenelement 20 aus einem metallenen Werkstoff und das Energieabsorptionselement 40 aus einem Kunststoffmaterial hergestellt sind oder das vordere Strebenelement 20 aus einem Kunststoffmaterial und das Energieabsorptionselement 40 aus einem metallenen Werkstoff bestehen. Wichtig ist, dass das vordere Strebenelement 20 und das Energieabsorptionselement 40 so gestaltet sind, dass bei einer kollisionsbedingten Kraftbeaufschlagung der dritten Lastebene 36 die Kräfte - vorzugsweise analog zur Hauptlängsträgerebene 28 - entsprechend aufgenommen, das heißt durch Verformung von zumindest des Energieabsorptionselements 40 absorbiert und im Übrigen in die Karosserietragstruktur weitergeleitet werden.

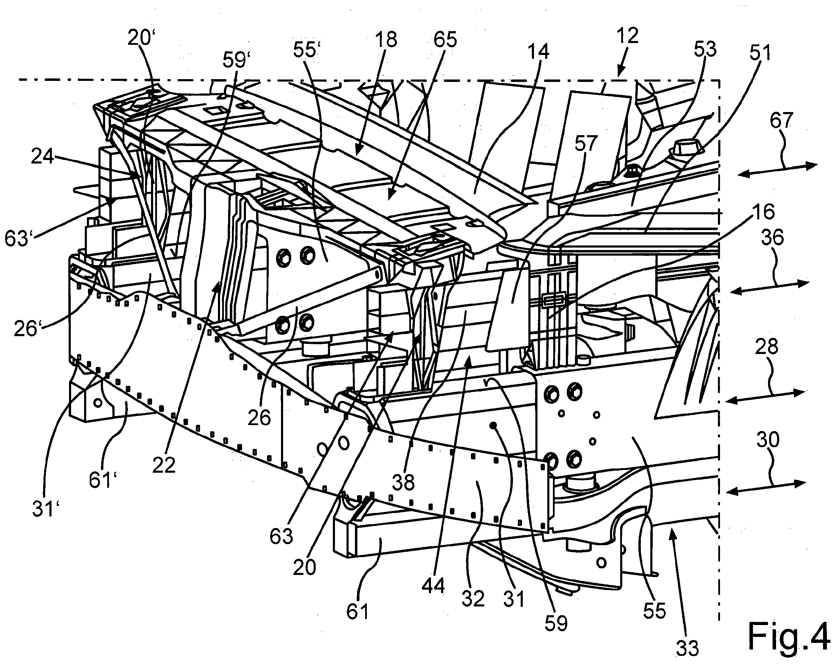

Figur 4 zeigt in perspektivischer Darstellung einen Ausschnitt eines Personenkraftwagens in seinem Frontbereich mit einem weiteren Ausführungsbeispiel des Frontendträgers 10. Die Vorbaustruktur 12 des Personenkraftwagens umfasst ein Querträgerelement 14, an dessen Enden jeweils ein oberes Strebenelement 51 angebunden ist, welches das Querträgerelement 14 mit in der Darstellung gemäß Figur 4 nicht erkennbaren Kotlfügelbänken verbindet, an denen jeweils ein Kotflügel zu befestigen ist. Von den oberen Strebenelementen 51 ist lediglich das auf der linken Seite des Personenkraftwagens vorgesehene Strebenelement 51 erkennbar. Die Kotflügelbänke werden nach hinten jeweils mittels eines weiteren oberen Strebenelements 53 an einem auch als Dämpferdom bezeichneten Federbeindom abgestützt. Die oberen Strebenelemente 51, 53 liegen zumindest im Wesentlichen in der gleichen horizontalen, sich in Fahrzeuglängsrichtung (x-Richtung) und Fahrzeugquerrichtung (y-Richtung) aufspannenden gedachten (x-y-)Ebene wie das hintere Querträgerelement 14 und das vordere Querträgerelement 18 (Kühlerbrücke).

In Figur 4 sind ferner auch Längsträger 55, 55' der ersten, auch als Hauptlängsträgerebene bezeichneten Längsträgerebene 28 zu erkennen, an welchen das jeweilige Energieabsorptionselement 31 beziehungsweise 31' befestigt ist, hier mittels jeweils mehrerer Schraubverbindungen. Hierzu sind die Energieabsorptionselemente 31, 31' endseitig in die Längsträger 55, 55' eingesteckt und nachfolgend verschraubt.

Die hinteren Strebenelemente, von denen auch in der Darstellung gemäß Figur 4 lediglich das auf der linken Seite der Vorbaustruktur vorgesehene Strebenelement 16 erkennbar ist, sind hier als Z-Streben in Form länglicher, sich in Fahrzeughochrichtung (z-Richtung) vom Querträgerelement 14, den Strebenelementen 51 beziehungsweise dem Verbindungsbereich zwischen diesen Bauteilen nach unten weg erstreckenden Konsolen ausgebildet. An den hinteren Strebenelementen 51 ist jeweils eine Aufnahme 57 zum Einführen und gegebenenfalls Befestigen des jeweiligen Energieabsorptionselements 38 der dritten Lastebene 36 vorgesehen. Hierzu ist die auf der dem Energieabsorptionselement 38 zugewandten Seite des hinteren Strebenelements 16 vorgesehene Aufnahme 57 bei diesem Ausführungsbeispiel U-förmig ausgebildet. Die Seitenwände der Aufnahme 57 begrenzen seitlich das Energieabsorptionselement 38 und verhindern im Kollisionsfall bei Kraftbeaufschlagung der dritten Lastebene 36 mit Kräften ein seitliches Ausweichen des Energieabsorptionselements 38 und gewährleisten eine zuverlässige Abstützung desselben. Zu erkennen ist weiterhin, dass die hinteren Strebenelemente 16 in Fahrzeuglängsrichtung in Höhe der Längsträger 55, 55' angeordnet und an diesen befestigt sind und damit in einem Bereich der Karosserievorbeistruktur, welche bei einem Reparaturcrash noch nicht beschädigt wird.

Der Frontendträger 10 ist dabei über die vorderen Z-Streben (Strebenelemente 20, 20') an der ersten Hauptlängsträgerebene 28 abgestützt, wobei die vorderen Z-Streben mit den Energieabsorptionselementen 31 (Crashboxen) verbunden und beispielsweise an einer in Fahrzeughochrichtung nach oben weisenden Oberseite 59 beziehungsweise 59' der Crashboxen abgestützt sind.

Von der unteren Längsträgerebene 30, in welcher sich der Integralträger 33 befindet, sind unter anderem jeweilige, in Fahrzeugquerrichtung voneinander beabstandete Längsträger 61 und 61' zu erkennen.

Bei dem Ausführungsbeispiel gemäß Figur 4 ist jeweilige Energieabsorptionselement 38 in die jeweilige vordere Z-Strebe (vorderes Strebenelement 20 beziehungsweise 20') integriert. Dies bedeutet, dass die jeweilige vordere Z-Strebe und das jeweilige Energieabsorptionselement 38 durch ein gemeinsames Bauteil, beispielsweise ein gemeinsames Spritzgussteil oder Gussteil, gebildet sind. Unter der Integration des Energieabsorptionselements 38 in die jeweilige vordere Z-Strebe ist zu verstehen, dass die jeweilige vordere Z-Strebe und das jeweilige Energieabsorptionselement 38 insbesondere einstückig miteinander ausgebildet sind. In bevorzugter Ausführungsform ist vorgesehen, dass diese Bauteile aus Kunststoffmaterial hergestellt sind.

Bei dem Ausführungsbeispiel gemäß Figur 4 verläuft das jeweilige Energieabsorptionselement 38 nicht nur im Bereich beziehungsweise Freiraum zwischen den vorderen Strebenelementen 20, 20' und hinteren Strebenelementen 16, sondern weist noch einen in Fahrtrichtung vor dem jeweiligen vorderen Strebenelement 20, 20' von diesem nach vorne weg stehenden Längsabschnitt 63 beziehungsweise 63' auf. Hierdurch ist es insbesondere möglich, die Lage der jeweiligen vorderen Z-Strebe in Fahrzeuglängsrichtung freier auswählen zu können und trotzdem eine besonders frühe Aktivierung des jeweiligen Energieabsorptionselements 38 zu gewährleisten.

Bei dem Ausführungsbeispiel gemäß Figur 4 ist das Querträgerelement 18 des Frontendträgers 10 als flächiges, plattenförmiges Bauteil ausgebildet, in welches eine Crashstruktur integriert beziehungsweise daran ausgebildet ist, welche beispielsweise bei einer Frontalkollision unter Energieverzehrung deformierbar ist. Die Crashstruktur ist beispielsweise als Rippen- und/oder Wabenstruktur ausgebildet und umfasst demzufolge eine Mehrzahl von Rippen und/oder Waben, mittels welchen sich ein besonders hohes Energieaufnahmevermögen gewichtsgünstig realisieren lassen. Durch die Integration einer Crashstruktur in das Querträgerelement 18 ist ein Energieabsorptionselement 65 und somit eine zusätzliche, obere vierte Lastebene 67 geschaffen, welche wie die anderen drei Lastebenen 28, 30, 36 mittels eines Doppelpfeils schematisch gekennzeichnet sind. Diese vierte Lastebene 67 erstreckt sich nicht nur über seitliche Bereiche des Vorbaus, sondern erstreckt sich über einen wesentlichen Teil der Fahrzeugbreite zwischen den vorderen Z-Streben (Strebenelemente 20, 20'). Mit anderen Worten kann mittels des Energieabsorptionselements 65 eine zusätzliche Energieaufnahme im Bereich zwischen den vorderen Z-Streben erreicht werden, so dass ein besonders hoher Betrag an Unfallenergie mittels des Frontendträgers 10 absorbiert werden kann. Um im Crashfall sich energieabsorbierend verformen zu können, stützt sich das Querträgerelement 18 beziehungsweise dessen Crashstruktur/das Energieabsorptionselement 65 an seinem hinteren Querrand an dem hinteren Querträgerelement 14 ab.

Gemäß einem zweiten Ausführungsbeispiel der Erfindung sind das Querträgerelement 18 und das Energieabsorptionselement 65 zwei getrennt voneinander ausgebildete Teile, die zur Ausbildung einer Querträger- und Energieabsorptionsstruktur zwischen den beiden Z-Streben 20, 20' miteinander verbunden sind. So ist es denkbar, dass das Querträgerelement 18 als separates, aus Metall bestehendes Bauteil, insbesondere als Hohlprofilbauteil ausgebildet ist, welches mit dem vorzugsweise als Kunststoffteil ausgebildeten Energieabsorptionselement 65 beispielsweise verschraubt wird. Vorteilhaft an der Mehrteiligkeit dieser Querträgerstruktur ist, unabhängig von deren Herstellung und Material, dass eine Verschiebung dieser beiden Bauteile in Z-Richtung zum Zwecke der Höhenausrichtung derselben möglich ist.

Bei einem dritten Ausführungsbeispiel der Erfindung ist das Energieabsorptionselement 65 an dem aus ebenfalls aus Kunststoff oder alternativ aus Metall oder einem Hybridmaterial bestehenden Querträgerelement 18 angespritzt.

Die genannte Crashstruktur ist beispielsweise durch einen Kunststoff gebildet, welcher beispielsweise mittels eines Spritzgießverfahrens verarbeitet wird. Das Querträgerelement 18 kann dabei beispielsweise ein sich zumindest im Wesentlichen in Fahrzeugquerrichtung erstreckendes Trägerteil, insbesondere aus einem metallischen Werkstoff, umfassen, wobei der die Crashstruktur bildende Kunststoff im Rahmen des Spritzgießverfahrens an das Trägerteil angespritzt wird. Alternativ oder zusätzlich ist es möglich, dass das Querträgerelement 18 beziehungsweise das Energieabsorptionselement 65 aus wenigstens einem Organoblech oder einem (kurz)faserverstärktem aufweist, welches mit dem Kunststoff versehen und dadurch ausgesteift ist. Hierdurch können das Unfallverhalten und das Energieaufnahmevermögen des Energieabsorptionselements 65 gezielt und bedarfsgerecht eingestellt werden.

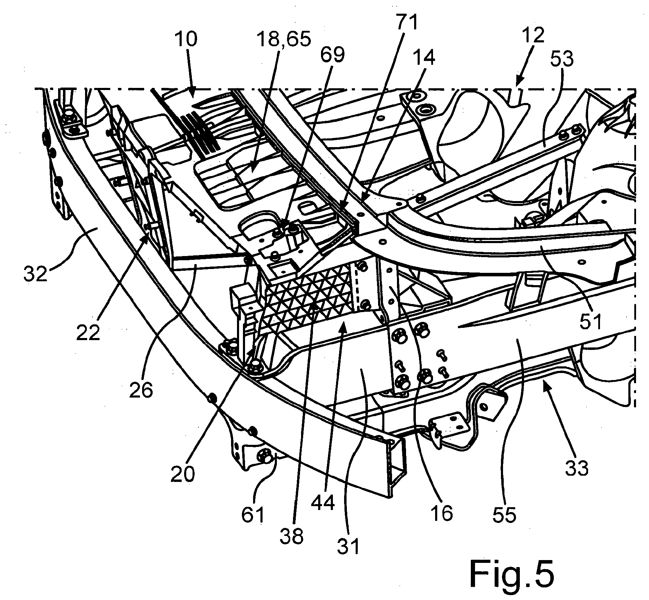

Figur 5 zeigt in perspektivischer Darstellung einen Ausschnitt eines Personenkraftwagens in seinem Frontbereich mit einem weiteren Ausführungsbeispiel des Frontendträgers 10. Auch hier ist das jeweilige vordere Strebenelement 20 beziehungsweise 20' einstückig mit dem jeweiligen Energieabsorptionselement 38 ausgebildet, vorzugsweise aus Kunststoffmaterial hergestellt. Dabei weist das Energieabsorptionselement 38 eine Waben ähnliche Struktur auf, was mittels einer entsprechenden Kreuzrippenstruktur realisiert ist.

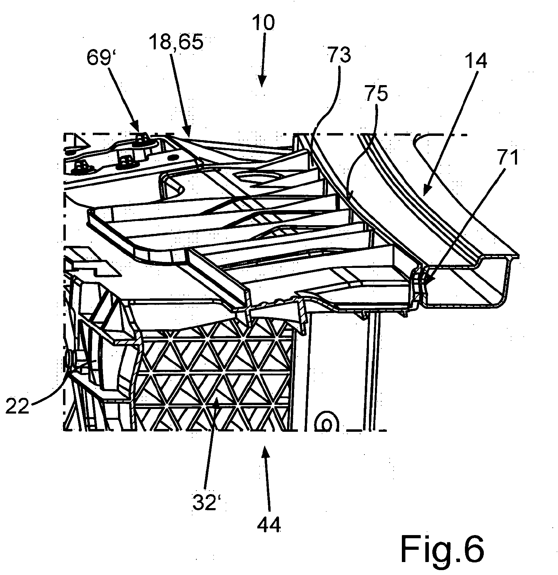

Anders als bei Ausführungsbeispiel gemäß Figur 4 sind die vorderen Strebenelemente 20, 20' in Fahrtrichtung deutlich weiter vorne angeordnet, hier in Höhe des StoßfängerBiegequerträgers 32 und an diesem befestigt, ebenso wie das Energieabsorptionselement 31 der ersten Längsträgerebene. Das Energieabsorptionselement 38 erstreckt sich bei diesem Ausführungsbeispiel also zumindest im Wesentlichen vollständig zwischen den vorderen und hinteren Strebenelementen 20 und 16 beziehungsweise 20' und 16'. Zu erkennen ist weiterhin, dass das obere Querträgerelement 18 des Frontendträgers 10 mittels Befestigungsmittel 69 mit dem vorderen Strebenelementen 20, 20' verbunden ist. Ein weiterer Unterschied gegenüber dem Ausführungsbeispiel gemäß Figur 4 besteht noch in der Ausgestaltung der hinteren Strebenelemente 16, die hier im Wesentlichen eine nur andere Form aufweisen, funktionell jedoch identisch sind und der rückwärtigen Abstützung des Energieabsorptionselements 38 und der Abstützung des hinteren Querträgerelements 14 und/oder des als Blechbauteil ausgebildeten oberen Strebenelements 51 dient. Das hintere Querträgerelement 14 ist hier als Hohlprofil ausgebildet. Das Energieabsorptionselement 38 und das hintere Querträgerelements 14 sind mittels Befestigungsmittel 71 miteinander verbunden, was im Folgenden anhand der Figur 6 näher erläutert wird.

In bevorzugter Ausführungsform sind die hinteren Strebenelemente 16 oberhalb am Querträgerelement 18 und/oder dem oberen Strebenelement 51 zumindest mittelbar angebunden, so dass sich insgesamt eine äußerst stabile, in Richtung der Fahrbahn nach unten hin offene Rahmenkonstruktion ergibt, die so an den Karosserierohbau angeschlossen beziehungsweise eingebunden ist, dass die Abstützung der Energieabsorptionselemente 38 in der dritten Lastebene 36 und gegebenenfalls des darüber angeordneten Energieabsorptionselement 64 bei dessen/deren energieabsorbierenden Verformung gewährleistet wird ohne versagend nach hinten weg zu knicken.

Figur 6 zeigt in vergrößerter Darstellung einen Ausschnitt des Frontendträgers 10 gemäß Figur 5, teilweise geschnitten auf Höhe des Mittelteils 22 des vorderen Querträgerelements 18. Zu erkennen ist das flächige, mit Versteifungslängs- und querrippen versehene vordere Querträgerelement 18 mit integriertem Energieabsorptionselement 65. Das Querträgerelement 18 weist an seinem hinteren Querrandbereich eine in senkrechter Richtung verlaufende Wand 73 mit einer Anlagefläche 75 an, an welcher das Querträgerelement 18 im montierten Zustand am Querträgerelement 14 flächig anliegt und bei einer kollisionsbedingten Kraftbeaufschlagung an diesem abstützt. Die beiden Querträgerelemente 18 und 14 sind mittels Befestigungsmittel 71, beispielsweise Schraubenelemente oder dergleichen, zerstörungsfrei lösbar miteinander verbunden. Hierzu weisen die Querträgerelemente hier rein beispielsweise miteinander fluchtende Öffnungen auf, in welche ein Befestigungsmittel 71 eingreift.

Allen vorstehend beschriebenen Ausführungsvarianten des erfindungsgemäßen Personenkraftwagens ist gemeinsam, dass der Karosserierohbau, das heißt die Tragstruktur des Kraftwagens eine zusätzliche Lastebene 67 aufweist, welche unterhalb der Kühlerbrücke (vorderes Querträgerelement 18) und oberhalb des Stoßfängerbiegequerträger 32 und somit auch der Hauptlängsträgerebene 28 angeordnet ist. Diese dient bei besonders flach bauenden Kraftwagen der Vermeidung des Unterfahrens eines hohen Kollisionspartner und der frühzeitigen Aktivierung der Crashstruktur des Kraftwagens in seinem Vorbaubereich, so dass durch eine gewünschte energieabsorbierende Verformung der am Frontendträger und den übrigen Lastebenen 67, 30, 28 vorgesehenen Crashabsorberelemente, insbesondere der Energieabsorptionselemente 32, 38 sowie zumindest einiger der im Vorbau vorgesehenen Längsträger und Strebenelemente die auf die Insassen wirkenden Belastungen reduziert sind. Für diese zusätzliche rohbauseitige Crashstruktur der dritten Lastebene 36 können vordere und hintere Strebenelemente (z-Streben) unterschiedlichster Ausführungsform eingesetzt werden. Ebenso Energieabsorptionselemente 38 in unterschiedlichster Ausprägung.

## Patentansprüche

1. Personenkraftwagen
- mit einem wenigstens ein Querträgerelement (18) und wenigstens zwei seitlichen, über das Querträgerelement (18) miteinander verbundenen und sich in Fahrzeughochrichtung nach unten vom Querträgerelement (18) weg erstreckenden, vorderen Strebenelementen (20,20') aufweisenden Frontendträger (10),
- mit einer in Fahrzeughochrichtung unterhalb des Frontendträgers (10) angeordneten, ersten Längsträgerebene (28), in welcher seitliche Längsträger (55,55') sowie zugehörige, zumindest mittelbar mit einem sich zumindest im Wesentlichen in Fahrzeugquerrichtung erstreckenden Biegequerträger (32) eines Stoßfängers verbundene Energieabsorptionselemente (31,31') angeordnet sind, wobei der Frontendträger (10) über die vorderen Strebenelemente (20,20') an der ersten Längsträgerebene (28) abgestützt ist,
- mit zur Ausbildung einer weiteren Lastebene (36) dienenden, oberhalb der ersten Längsträgerebene (28) und unterhalb des oberen Querträgerelements (18) vorgesehenen, seitlichen Energieabsorptionselementen (38,40), von denen jeweils eines mit dem jeweiligen vorderen Strebenelement (20,20') verbunden oder in das jeweilige vordere Strebenelement (20,20') integriert ist und welche jeweils einen, das jeweilige vordere Strebenelement (20,20') in Fahrzeuglängsrichtung nach hinten überragenden Abstützbereich (44) aufweisen,
- mit wenigstens einem hinter dem jeweiligen Energieabsorptionselement (38,40) anordenbaren Strukturbauteil (16), an welchem das Energieabsorptionselement (38,40) mit seinem Abstützbereich (44) abstützbar oder abgestützt ist.

2. Personenkraftwagen nach Anspruch 1,
**dadurch gekennzeichnet, dass**
das wenigstens eine Strebenelement (20,20') und das Energieabsorptionselement (38,40) einstückig ausgebildet sind.

3. Personenkraftwagen nach Anspruch 2,
**dadurch gekennzeichnet, dass**
das wenigstens eine Strebenelement (20,20') und das Energieabsorptionselement (38,40) durch ein gemeinsames Gussteil oder Kunststoffteil gebildet sind.

4. Personenkraftwagen nach einem der Ansprüche 1 bis 3,
**dadurch gekennzeichnet, dass**
das wenigstens eine Strebenelement (20,20') und das Energieabsorptionselement (38,40) durch Gießen gebildet sind.

5. Personenkraftwagen nach einem der vorhergehenden Ansprüche,
**dadurch gekennzeichnet, dass** das Strukturbauteil (16) ein rohbaufest montiertes, hinteres Strebenelement (16) ist, an welchem das jeweilige Energieabsorptionselement (38,40) mit seinem Abstützbereich (44) abstützbar oder abgestützt ist.

## Claims

1. Passenger car
- with a front end carrier (10) having at least one crossmember element (18) and at least two lateral front strut elements (20, 20') joined to each other by way of the crossmember element (18) and extending downwards away from the crossmember element (18) in the vertical direction of the vehicle,
- with a first side member plane (28) located below the front end carrier (10) in the vertical direction of the vehicle, in which first side member plane (28) there are located lateral side members (55, 55') and associated energy absorption elements (31, 31') joined at least indirectly to a bending crossmember (32) of a bumper extending at least substantially in the transverse direction of the vehicle, wherein the front end carrier (10) is supported on the first side member plane (28) by way of the front strut elements (20, 20'),
- with lateral energy absorption elements (38, 40) serving to form a further load plane (36) and provided above the first side member plane (28) and below the crossmember elements (18), one each of which lateral energy absorption elements (38, 40) is connected to the respective front strut element (20, 20') or integrated into the respective front strut element (20, 20') and each of which has a support region (44) extending beyond the respective front strut element (20, 20') towards the rear in the longitudinal direction of the vehicle,
- with at least one structural component (16), which can be placed behind the respective energy absorption element (38, 40) and on which the energy absorption element (38, 40) can be or is supported with its support region (44).

2. Passenger car according to claim 1,
**characterised in that**
the at least one strut element (20, 20') and the energy absorption element (38, 40) are designed as a single part.

3. Passenger car according to claim 2,
**characterised in that**
the at least one strut element (20, 20') and the energy absorption element (38, 40) are represented by a joint cast or plastic component.

4. Passenger car according to any of claims 1 to 3
**characterised in that**
the at least one strut element (20, 20') and the energy absorption element (38, 40) are produced by casting.

5. Passenger car according to any of the preceding claims,
**characterised in that**
the structural component (16) is a rear strut element (16), which is permanently mounted on the body shell and on which the respective energy absorption element (38, 40) can be or is supported with its support region (44).

## Revendications

1. Voiture de tourisme
- comprenant un au moins un support d'extrémité avant (10) comprenant un élément de longeron de châssis (18) et au moins deux éléments d'entretoise de châssis avant (20 20') latéraux reliés l'un à l'autre au moyen de l'élément de longeron de châssis (18) et qui s'étendent dans la direction verticale du véhicule vers le bas à partir de l'élément de longeron de châssis (18),
- comprenant un premier plan de support transversal disposé dans la direction verticale de véhicule en dessous du support d'extrémité avant (10), dans lequel sont disposés des supports longitudinaux latéraux (55, 55') ainsi que des éléments d'absorption d'énergie (31, 31') respectifs, au moins directement reliés à un support transversal plié (32) d'un pare-chocs s'étendant essentiellement dans la direction transversale de véhicule, le support d'extrémité avant (10) s'appuyant sur le premier plan de support longitudinal (28) au-dessus des éléments d'entretoise avant (20, 20'),
- comprenant des éléments d'absorption d'énergie latéraux (38, 40) prévus au-dessus du premier plan de support longitudinal (28) et en dessous de l'élément de longeron de châssis (18), servant à former un autre plan de charge (36), parmi lesdits éléments d'absorption respectivement l'un est relié à l'élément d'entretoise de châssis avant respectif (20, 20') ou est intégré dans l'élément d'entretoise de châssis avant respectif (20, 20') et lesquels présentent chacun respectivement une zone d'appui (44) faisant saillie de l'élément d'entretoise avant respectif (20 20') dans la direction longitudinale du véhicule vers l'arrière,
- comprenant au moins un élément de structure (16) pouvant être disposé derrière l'élément d'absorption d'énergie respectif (38, 40) sur lequel l'élément d'absorption d'énergie (38, 40) peut être en appui ou est en appui au moyen de sa zone d'appui (44).

2. Voiture de tourisme selon la revendication 1, **caractérisée en ce que** l'au moins un élément d'entretoise (20, 20') et l'élément d'absorption d'énergie (38, 40) sont conçus d'un seul tenant.

3. Voiture de tourisme selon la revendication 2, **caractérisée en ce que** l'au moins un élément d'entretoise (20, 20') et l'élément d'absorption d'énergie (38, 40) sont formés par une pièce moulée commune ou une pièce en matière plastique.

4. Voiture de tourisme selon l'une quelconque des revendication 1 à 3, **caractérisée en ce que** l'au moins un élément d'entretoise (20, 20') et l'élément d'absorption d'énergie (38, 40) sont formés par moulage.

5. Voiture de tourisme selon l'une quelconque des revendications précédentes, **caractérisée en ce que** le composant de structure (16) est un élément d'entretoise (16) arrière monté sur la carrosserie, sur lequel l'élément d'absorption d'énergie (38, 40) s'appuie ou peut s'appuyer au moyen de sa zone d'appui (44).
